# EUROPÄISCHE PATENTSCHRIFT

(11) **EP 0 773 148 B1**
(45) Veröffentlichungstag und Bekanntmachung des Hinweises auf die Patenterteilung: **28.11.2001**
(21) Anmeldenummer: 96113968.0
(22) Anmeldetag: 31.08.1996
(51) Int. Cl.: B60R 25/04, B60R 11/02

(54) **Sicherungsvorrichtung für ein Kraftfahrzeug**
Security device for a motor vehicle
Dispositif de sécurité pour véhicule à moteur

(30) Priorität: 11.11.1995 DE 19542104
(43) Veröffentlichungstag der Anmeldung: 14.05.1997
(73) Patentinhaber: Volkswagen Aktiengesellschaft, 38436 Wolfsburg (DE)
(72) Erfinder: Gänicke, Thomas, 38448 Wolfsburg (DE); Sandkamp, Brigitte, 38448 Wolfsburg (DE)

(56) Entgegenhaltungen:
- EP-A- 0 088 490
- EP-A- 0 645 286
- DE-A- 3 514 241
- DE-A- 4 325 657
- DE-A- 4 341 333
- DE-C- 4 213 508
- DE-U- 9 313 187
- GB-A- 2 226 593

## Beschreibung

Die Erfindung betrifft eine Sicherungseinrichtung gemäß dem Oberbegriff des Anspruchs 1.

Allgemein gesagt, betrifft die Erfindung eine Sicherungseinrichtung, die in Abhängigkeit von einer Koinzidenz-Prüfung eines eingebbaren Vergleichscodes mit einem abgespeicherten Identifizierungscode ein Steuersignal zur Ein- oder Abschaltung eines Bauteiles eines Kraftfahrzeuges erzeugt.

Aus den unterschiedlichsten Druckschriften sind Diebstahlschutzeinrichtungen für Kraftfahrzeuge bekannt. So wird in der deutschen Patentschrift DE 43 510 758 C1 ein Sicherungssystem für Kraftfahrzeuge beschrieben, bei dem einem mechanischen Schlüssel eine elektronische Baugruppe in Form eines Transponders zugeordnet ist, die einer im Kraftfahrzeug festeingebauten Sende- und Empfangseinheit nach der Aktivierung durch diese ein Codesignal übermittelt, das von einer Dekodiereinrichtung der Sende- und Empfangseinheit mit einem gespeicherten Codesignal auf Koinzidenz geprüft wird. Abhängig von dem Ergebnis dieser Prüfung wird das zu sichernde Bauteil freigegeben oder blockiert. Dieses Bauteil kann sowohl der Zündkreis des Kraftfahrzeuges als auch der Kraftstoffversorgungskreis sein.

Ein ähnliches System ist aus den Unterlagen zu einer Vortragsreihe vom Haus der Technik E. V. "Ausgewählte Kapitel der Kfz.-Elekronik", Seite 29 - 32 am 13./14. Oktober 1993 in Dresden bekannt. Hier werden von einem elektronischen Schlüssel induktiv Daten zu einer im Kraftfahrzeug vorhandenen Basisstation übertragen, die diese Daten mit abgespeicherten Daten vergleicht. Bei einem passenden Schlüssel wird das Steuergerät der Motorsteuerung freigeschaltet.

Schließlich offenbart die DE-C-42 13 508 eine Sicherungseinrichtung für mindestens ein durch ein Steuersignal schaltbares Bauteil eines Kraftfahrzeugs mit einer ersten Identifizierungseinrichtung, in welcher ein erster Identifizierungscode mit einem eingebbaren Vergleichscode verglichen wird, wobei in Abhängigkeit des Vergleiches ein erstes Steuersignal gebildet wird, und mit einer zweiten Identifizierungseinrichtung, in welcher ein zweiter Identifizierungscode mit einem eingebbaren Vergleichscode verglichen wird, wobei in Abhängigkeit des Vergleiches das mindestens ein Bauteil des Kraftfahrzeuges ein- und/oder abschaltende Steuersignal gebildet wird, wobei die zweite Identifizierungseinrichtung über das erste Steuersignal der ersten Identifizierungseinrichtung aktivierbar ist.

Die Aufgabe der Erfindung ist es, die Manipulationssicherheit einer solchen bekannten Sicherheitsvorrichtung zu erhöhen.

Die Aufgabe wird durch die Merkmale des Patentanspruchs 1 gelöst. Vorteilhafte Aus- und Weiterbildungen sind in den Unteransprüchen dargestellt.

Die erfindungsgemäße Sicherungseinrichtung besteht aus einer ersten und einer zweiten Identifizierungseinrichtung, die jeweils eine Speichereinrichtung, in welcher ein Identifizierungscode abgelegt ist, und eine Vergleichseinrichtung, in welcher der jeweiligen Identifizierungscode mit einem eingebbaren Vergleichscode verglichen und in Abhängigkeit dieses Vergleiches ein Steuersignal gebildet wird, aufweisen, wobei das Steuersignal der ersten Identifizierungseinrichtung die zweite Identifizierungseinrichtung aktiviert. Die zweite Identifizierungseinrichtung sendet ein Steuersignal, durch welches mindestens ein Bauteil des Kraftfahrzeuges freischaltbar oder sperrbar ist. Die erste Identifizierungseinrichtung, welche in Abhängigkeit des Vergleiches ein Steuersignal an die zweite Identifierungseinrichtung sendet, ist in einem lösbar im Kraftfahrzeug montierbaren Modul angeordnet. Dies kann vorzugsweise ein Gerät der Komfortelektronik beziehungsweise ein Teil davon sein.

Vorzugsweise sind beide Identifizierungseinrichtungen örtlich getrennt im Kraftfahrzeug angeordnet. Dadurch wird die Möglichkeit einer Manipulierung durch unberechtigte Benutzer weiter gesenkt.

Gemäß vorteilhafter Weiterbildungen können die mit dem abgelegten Identifizierungscode zu vergleichenden Vergleichscode manuell über Eingabeelemente eingegeben als auch über eine mobile Transpondereinrichtung an die jeweilige Identifizierungseinrichtung induktiv übertragen werden.

Desweiteren kann vorgesehen sein, daß beide Identifizierungscodes gleich sind. Dies hat dann den Vorteil, daß das lösbar im Kraftfahrzeug montierte Gerät der Komfortelektronik und das von der zweiten Identifizierungseinrichtung schaltbare Bauteil gleichzeitig freigeschaltet werden, wenn das Gerät der Komfortelektronik oder entsprechend entfernbare Teile im Kraftfahrzeug vorhanden sind.

Nachfolgend wird die Erfindung anhand von Ausführungsbeispielen näher beschrieben. Die zugehörigen Zeichnungen zeigen:
- Figur 1:: ein Blockschaltbild einer Ausführungsform der erfindungsgemäßen Sicherungseinrichtung und
- Figur 2:: ein Blockschaltbild einer weiteren Ausführungsform.

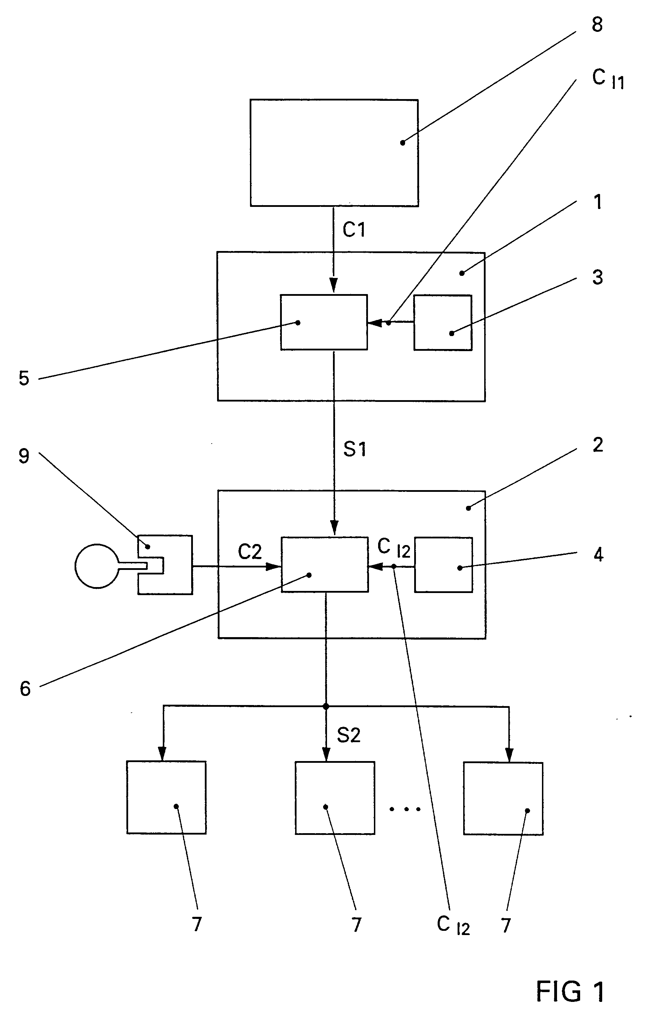

Die in Figur 1 schematisch dargestellte Sicherungseinrichtung zum Freischalten eines Bauteils 7 eines Kraftfahrzeuges in Abhängigkeit eines Vergleiches eines eingebbaren Vergleichscodes mit einem gespeicherten Identifizierungscode weist eine Eingabeeinrichtung 8 zur Eingabe eines Vergleichscodes C1 in die Identifizierungseinrichtung 1 auf, die in einem lösbar im Kraftfahrzeug montierbaren Modul angeordnet ist.

Nach einer eventuellen Dekodierung des Vergleichscodes C1 wird dieser in der Vergleichseinrichtung 5 mit einem in der Speichereinrichtung 3 abgelegten Identifizierungscode C _{I1} verglichen. Ergibt dieser Vergleich, daß beide Codes C1; C _{I1} übereinstimmen, wird ein Steuersignal S1 zur Aktivierung der Identifizierungseinrichtung 2 erzeugt. Nach der Aktivierung der Identifizierungseinrichtung 2 und Übertragung eines Vergleichscodes C2 über die Transpondereinheit 9, die beispielsweise im Zündschlüssel des Kraftfahrzeuges untergebracht ist, erfolgt der Vergleich des übertragenen Vergleichscodes C2 mit dem in der Vergleichseinrichtung 4 abgelegten Identifizierungscode C _{I2}. Bei positiven Ergebnis der Koinzidenz-Prüfung wird über das Steuersignal S2 das oder die Bauteile 7, beispielsweise die Zündung, das Motorsteuergerät oder die Kraftstoffzufuhreinrichtung freigeschaltet, die Wegfahrsperre des Kraftfahrzeuges ist somit aufgehoben.

Ergibt dagegen der Vergleich des Vergleichscodes C1 mit dem Identifizierungscode C _{I1} in der Identifizierungseinrichtung 1, daß die Codes unterschiedlich sind, wird kein Steuersignal S1 erzeugt und die zweite Identifizierungseinrichtung 2 bleibt gesperrt, es erfolgt also keine Koinzidenz-Prüfung des über die Transpondereinheit 9 übertragenen Vergleichscodes C2 mit dem abgelegten Identifizierungscode der Speichereinrichtung 4 und die Wegfahrsperre des Kraftfahrzeuges bleibt wirksam.

Im Ausführungsbeispiel ist vorgesehen, daß die Identifizierungseinrichtung 1 in einem Gerät der Komfortelektronik untergebracht ist. Dies kann beispielsweise ein Radiogerät, ein Mobilfunktelefon oder aber ein Navigationsgerät sein. Dies hat den Vorteil, daß über das Steuersignal S1, das die Identifizierungseinrichtung 2 der Wegfahrsperre aktiviert, gleichzeitig das Gerät der Komfortelektronik freigeschaltet beziehungsweise gesperrt werden kann.

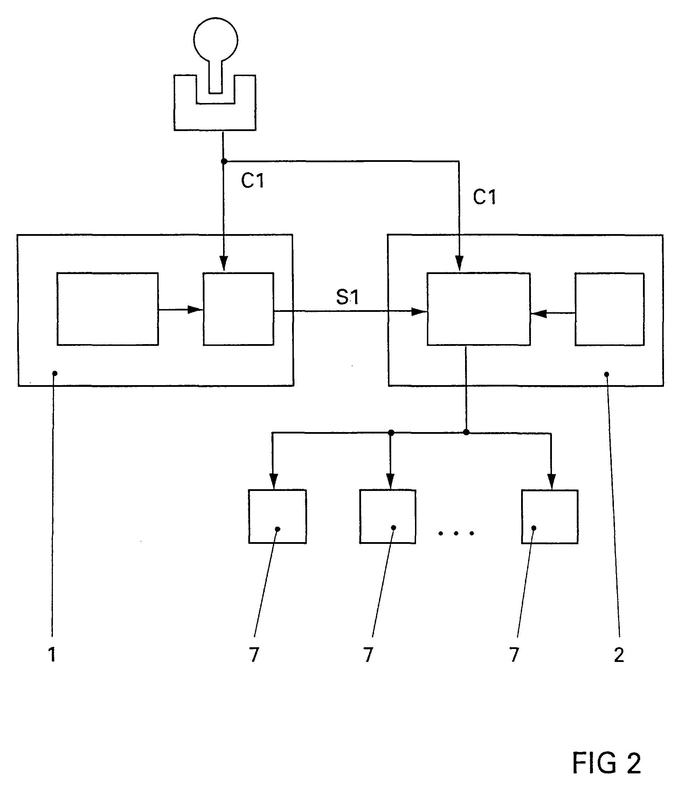

Bei der in Figur 2 dargestellten Ausführungsform ist die Identifizierungseinrichtung 1 zusammen mit einem Gerät der Komfortelektronik oder einem Teil dieses Gerätes, beispielsweise der Bedieneinheit, ebenfalls aus dem Kraftfahrzeug entnehmbar. Somit ist die Identifizierungseinrichtung 2 für das oder die Bauteile 7 nur aktivierbar, wenn sich das entsprechende Gerät oder der Teil des Gerätes, der die Identifizierungseinrichtung 1 enthält, im Kraftfahrzeug befindet. Dann aber kann wie im Blockschaltbild gezeigt der gleiche Code C1 sowohl zur Koinzidenz-Prüfung in der Identifizierungseinrichtung 1 als auch in der Identifizierungseinrichtung 2 verwendet werden.

## Patentansprüche

1. Sicherungseinrichtung für mindestens ein durch ein Steuersignal schaltbares Bauteil eines Kraftfahrzeuges mit
- einer ersten Identifizierungseinrichtung (1), in welcher ein erster Identifizierungscode (C _{I1}) mit einem eingebbaren Vergleichscode (C1) verglichen und in Abhängigkeit des Vergleiches ein erstes Steuersignal (S1) gebildet wird, und
- einer zweiten Identifizierungseinrichtung (2), in welcher ein zweiter Identifiierungscode (C _{I2}) mit einem eingebbaren Vergleichscode (C2) verglichen und in Abhängigkeit des Vergleiches das mindestens ein Bauteil (7) des Kraftfahrzeuges ein- und/oder abschaltende Steuersignal (S2) gebildet wird, wobei die zweite Identifizierungseinrichtung (2) über das erste Steuersignal (S1) der ersten Identifizierungseinrichtung (1) aktivierbar ist,
**dadurch gekennzeichnet, dass** die Identifizierungseinrichtungen (1, 2) je eine Speichereinrichtung (3, 4), in welcher der jeweilige Identifizierungscode (C _{I1}, C _{I2}) abgelegt ist, und je eine Vergleichseinrichtung (5, 6), in welcher der jeweilige Identifizierungscode (C _{I1}, C _{I2}) mit dem jeweiligen Vergleichscode (C1, C2) verglichen wird, aufweisen, wobei die erste Identifizierungseinrichtung (1) in einem lösbar im Kraftfahrzeug montierbaren Modul angeordnet ist.

2. Sicherungseinrichtung nach Anspruch 1, **dadurch gekennzeichnet, daß** die erste und zweite Identifizierungseinrichtung (1; 2) örtlich von einander getrennt im Kraftfahrzeug angeordnet sind.

3. Sicherungseinrichtung nach Anspruch 1 oder 2, **dadurch gekennzeichnet, daß** der erste und der zweite Identifizierungscode (C _{I1}; C _{I2}) gleich sind.

4. Sicherungseinrichtung nach Anspruch 1 oder 2, **dadurch gekennzeichnet, daß** der erste und zweite Identifizierungscode (C _{I1}; C _{I2}) unterschiedlich sind.

5. Sicherungseinrichtung nach einem Ansprüche 1 - 4, **dadurch gekennzeichnet, daß** mindestens einer der Vergleichscodes (C1; C2) manuell über Eingabeelemente (8) eingebbar ist.

6. Sicherungseinrichtung nach einem der Ansprüche 1 - 5, **dadurch gekennzeichnet, daß** mindestens einer der Vergleichscodes (C1; C2) von einer mobilen Transpondereinheit (9) an die jeweilige Identifizierungseinrichtung (1, 2) induktiv übertragbar ist.

7. Sicherungseinrichtung nach Anspruch 6, **dadurch gekennzeichnet, daß** die Transpondereinheit (9) im Zündschlüssel des Kraftfahrzeuges untergebracht ist.

8. Sicherungseinrichtung nach einem der Ansprüche 1 - 7, **dadurch gekennzeichnet, daß** die Identifizierungseinrichtung (1) in einem Gerät der Komfortelektronik angeordnet ist.

9. Sicherungseinrichtung nach einem der Ansprüche 1 - 8, **dadurch gekennzeichnet, daß** die Identifizierungscodes (C _{I1}; C _{I2}) veränderbar sind.

## Claims

1. Security device for at least one motor vehicle component which can be switched by a control signal, having
- a first identification device (1), in which a first identification code (C _{I1}) is compared with a comparison code (C1) which can be input and a first control signal (S1) is formed in dependence upon the comparison, and
- a second identification device (2) in which a second identification code (C _{I2}) is compared with a comparison code (C2) which can be input and in dependence upon the comparison the control signal (S2) which switches on and/or off at least one component (7) of the motor vehicle is formed, wherein the second identification device (2) can be activated by the first control signal (S1) of the first identification device (1),
**characterised in that** the identification devices (1, 2) each comprise a storage device (3, 4) in which the respective identification code (C_{I1}, C _{I2}) is stored, and each comprise a c.omparator device (5, 6) in which the respective identification code (C _{I1}, C_{I2}) is compared with the respective comparison code (C1, C2), wherein the first identification device (1) is disposed in a module which can be releasably mounted in the motor vehicle.

2. Security device according to claim 1, **characterised in that** the first and second identification devices (1; 2) are disposed in mutually separate locations in the motor vehicle.

3. Security device according to claim 1 or 2, **characterised in that** the first and second identification codes (C _{I1}; C _{I2}) are identical.

4. Security device according to claim 1 or 2, **characterised in that** the first and second identification codes (C _{I1}; C _{I2}) are different.

5. Security device according to any one of claims 1 - 4, **characterised in that** at least one of the comparison codes (C1; C2) can be input manually by means of input elements (8).

6. Security device according to any one of claims 1 - 5, **characterised in that** at least one of the comparison codes (C1; C2) can be transmitted inductively by a mobile transponder unit (9) to the respective identification device (1, 2).

7. Security device according to claim 6, **characterised in that** the transponder unit (9) is housed in the ignition key of the motor vehicle.

8. Security device according to any one of claims 1 - 7, **characterised in that** the identification device (1) is disposed in a device of the electronics of the extra features.

9. Security device according to any one of claims 1 - 8, **characterised in that** the identification codes (C _{I1}; C _{I2}) can be changed.

## Revendications

1. Dispositif de sécurité destiné à au moins un composant d'un véhicule automobile pouvant être commuté par un signal de commande, comportant
- un premier dispositif d'identification (1) dans lequel un premier code d'identification (C _{I1}) est comparé avec un code de comparaison (C1) pouvant être entré, un premier signal de commande (S1) étant généré en fonction de la comparaison, et
- un deuxième dispositif d'identification (2) dans lequel un deuxième code d'identification (C _{I2}) est comparé avec un code de comparaison (C2) pouvant être entré, et le signal de commande (S2) activant et/ou désactivant au moins un composant (7) du véhicule automobile étant généré en fonction de la comparaison, le deuxième dispositif d'identification (2) pouvant être activé par l'intermédiaire du premier signal de commande (S1) du premier dispositif d'identification (1),
**caractérisé en ce que** les dispositifs d'identification (1, 2) comportent chacun un dispositif de mémorisation (3, 4) dans lequel est enregistré le code d'identification respectif (C _{I1}, C _{I2}), et un dispositif de comparaison (5, 6) dans lequel le code d'identification respectif (C _{I1}, C _{I2}) est comparé au code de comparaison respectif (C1, C2), le premier dispositif d'identification (1) étant disposé dans un module pouvant être monté de façon amovible dans le véhicule automobile.

2. Dispositif de sécurité selon la revendication 1, **caractérisé en ce que** le premier et le deuxième dispositif d'identification (1 ; 2) sont disposés dans le véhicule automobile en étant localement séparés l'un de l'autre.

3. Dispositif de sécurité selon la revendication 1 ou 2, **caractérisé en ce que** le premier et le deuxième code d'identification (C _{I1} ; C _{I2}) sont identiques.

4. Dispositif de sécurité selon la revendication 1 ou 2, **caractérisé en ce que** le premier et le deuxième code d'identification (C _{I1} ; C _{I2}) sont différents.

5. Dispositif de sécurité selon l'une quelconque des revendications 1 à 4, **caractérisé en ce que** l'un au moins des codes de comparaison (C1 ; C2) peut être entré manuellement par l'intermédiaire d'éléments d'entrée (8).

6. Dispositif de sécurité selon l'une quelconque des revendications 1 à 5, **caractérisé en ce que** l'un au moins des codes de comparaison (C1 ; C2) peut être transmis par induction à chaque dispositif d'identification (1, 2) par un dispositif transpondeur mobile (9).

7. Dispositif de sécurité selon la revendication 6, **caractérisé en ce que** le dispositif transpondeur (9) est logé dans la clé de contact du véhicule automobile.

8. Dispositif de sécurité selon l'une quelconque des revendications 1 à 7, **caractérisé en ce que** le dispositif d'identification (1) est disposé dans un appareil de l'électronique de confort.

9. Dispositif de sécurité selon l'une quelconque des revendications 1 à 8, **caractérisé en ce que** les codes d'identification (C _{I1} ; C _{I2}) peuvent être modifiés.
